# EUROPÄISCHE PATENTANMELDUNG

(11) **EP 1 753 250 A1**
(43) Veröffentlichungstag der Anmeldung: **14.02.2007**
(21) Anmeldenummer: 05017426.7
(22) Anmeldetag: 10.08.2005
(51) Int. Cl.: H04Q 7/22

(54) **Verfahren zum ortsbezogenen Betrieb einer Teilnehmerstation eines Funkkommunikationssystems sowie Teilnehmerstation, Computerprogramm und Funkkommunikationssystem**

(71) Anmelder: SIEMENS AKTIENGESELLSCHAFT, 80333 München (DE)
(72) Erfinder: Lehmann, Gerald, 12101 Berlin (DE)

(57) **Zusammenfassung**

Bei einem Verfahren zum Betrieb einer Teilnehmerstation (UE) eines Funkkommunikationssystems wird ein Dienst (D1) in der Teilnehmerstation aktiviert und/oder eine Nachricht (NA) zur Aktivierung des Dienstes (D1, D2) von der Teilnehmerstation (UE) an eine Funkstation (NodeB2) des Funkkommunikationssystems gesendet, wenn die Teilnehmerstation (UE) ermittelt, dass sie sich in einem Gebiet (G) befindet, in dem der Dienst (D1, D2) aktiviert werden soll. Zum Positionsermitteln misst die Teilnehmerstation (UE) einen Wert wenigstens eines Parameters (E1, E2, E3, RT1, RT2, RT3). Erfindungsgemäß vergleicht die Teilnehmerstation (UE) den gemessenen Wert des wenigstens einen Parameters (E1, E2, E3, RT1, RT2, RT3) mit einem für den wenigstens einen Parameter (E1, E2, E3, RT1, RT2, RT3) vorgegebenen Wertebereich und ermittelt ihre Position als in dem Gebiet (G) gelegen, wenn der Vergleich ergibt, dass der Wert in dem Wertebereich liegt.

## Beschreibung

Die Erfindung betrifft ein Verfahren zum Betrieb einer Teilnehmerstation eines Funkkommunikationssystems sowie eine entsprechende Teilnehmerstation, ein entsprechendes Computerprogramm und ein entsprechendes Funkkommunikationssystem.

In Funkkommunikationssystemen werden Daten ortsbezogener Dienste (Location Based Services) zwischen Teilnehmerstationen und Funkstationen eines Funknetzes der Funkkommunikationssysteme über eine Luftschnittstelle übertragen. Daten eines ortsbezogenen Dienstes werden dann ausgetauscht, wenn sich eine Teilnehmerstation in einem Gebiet aufhält, in dem der Dienst für die Teilnehmerstation aktiviert und somit ausgeführt werden soll.

Die Zuverlässigkeit einer Aktivierung eines ortsbezogenen Dienstes hängt von der Genauigkeit der ermittelten Position einer zum Empfang des ortsbezogenen Dienstes vorgesehenen Teilnehmerstation ab. Je nach Art des ortsbezogenen Dienstes erfolgt das Ermitteln der Position in der Teilnehmerstation oder in einer netzseitigen Einrichtung des Funkkommunikationssystems. Das Durchführen einer Positionsbestimmung kann je nach Art des ortsbezogenen Dienstes sowohl von der Teilnehmerstation als auch netzwerkseitig ausgelöst werden. Einige ortsbezogene Dienste sehen den ständigen Vergleich der momentanen Position der Teilnehmerstation mit vorher bestimmten Gebieten vor. Befindet sich die Teilnehmerstation in einem dieser Gebiete, so wird ein bestimmter Dienst ausgelöst. Diese Art der Dienstaktivierung wird im englischen als "Location Area Based Triggering" bezeichnet.

Ein fortwährender Einsatz von Positionierungsverfahren wie z.B. A-GPS (Assisted Global Positioning System), E-OTD (Enhanced Observed Time Difference), erweiterte Cell-ID Verfahren (z.B. E-CITA, Enhanced Cell ID plus Timing Advance, entwickelt von der Siemens AG), beispielsweise für ortsbezogene Dienste, die auf dem Prinzip des Location Area Based Triggering beruhen, ist nachteilig, da der Berechnungs- und Signalisierungsaufwand für eine ständige Positionsbestimmung aufgrund eines erhöhten Stromverbrauchs eine drastische Reduzierung der Stand-by-Zeiten der Teilnehmerstation bewirken und Übertragungskapazitäten auf der Luftschnittstelle verbrauchen würde. Ein Positionierungsverfahren mit geringerem Berechnungs- und Signalisierungsaufwand stellt das ausschließliche Verwenden einer Kennung (Cell-ID) der Funkzelle dar, in der sich die Teilnehmerstation befindet. Hier ist die ständige Positionierung auf den Vergleich von aktueller Cell-ID (Cell-ID der momentanen versorgenden Funkzelle) mit vorgegebenen Cell-IDs (d.h. Cell-IDs von Funkzellen in denen der ortsbezogene Dienst aktiviert werden soll) beschränkt. Bei Übereinstimmung der aktuellen Cell-ID mit einer der vorher festgelegten Cell-IDs wird zum Beispiel eine entsprechende Meldung an das Netz gesendet. Dieses aufwandsgünstige Positionierungsverfahren hat jedoch den Nachteil, dass nur Genauigkeiten auf Basis von typischen Zellgrößen erreicht werden können. Diese Genauigkeit ist aber für viele ortsbezogene Dienste nicht ausreichend. Zwar sind Positionierungsverfahren bekannt, die neben der Cell-ID weitere ortsabhängige Informationen verwenden (z.B. Cell-IDs benachbarter Funkzellen und messbare Werte wie Empfangsfeldstärken und Signallaufzeiten in der versorgenden und in benachbarten Funkzellen [z.B. bei E-CITA]), diese Verfahren werden jedoch netzseitig durchgeführt und erfordern ein hohen Signalisierungsaufwand von der Teilnehmerstation an das Funknetz für die weiteren ortsabhängigen Informationen.

Ein fortwährender Einsatz von Positionierungsverfahren zum Aktivieren ortsbezogener Dienste ist beispielsweise aus der EP 1164804 A1 bekannt.

Aufgabe der Erfindung ist es, ein Verfahren zum Betrieb einer Teilnehmerstation sowie eine entsprechende Teilnehmerstation, ein entsprechendes Computerprogramm und ein entsprechendes Funkkommunikationssystem anzugeben, mittels derer eine in der Teilnehmerstation durchgeführte Positionsermittlung mit hoher Genauigkeit und geringem Berechnungsaufwand durchgeführt werden kann, um beispielsweise mit geringem Signalisierungsaufwand für das Aktivieren oder Ausführen eines ortsbezogenen Dienstes verwendet zu werden.

Diese Aufgabe wird mit dem Verfahren sowie der Teilnehmerstation, dem Computerprogramm und dem Funkkommunikationssystem gemäß den unabhängigen Ansprüchen gelöst.

Vorteilhafte Ausgestaltungen und Weiterbildungen der Erfindung sind Gegenstand der abhängigen Ansprüche.

Bei den erfindungsgemäßen Verfahren zum Betrieb einer Teilnehmerstation eines Funkkommunikationssystems wird ein Dienst in der Teilnehmerstation aktiviert und/oder eine Nachricht zur Aktivierung des Dienstes von der Teilnehmerstation an eine Funkstation des Funkkommunikationssystems gesendet, wenn die Teilnehmerstation ermittelt, dass sie sich in einem Gebiet befindet, in dem der Dienst aktiviert werden soll. Zum Positionsermitteln misst die Teilnehmerstation einen Wert wenigstens eines Parameters. Erfindungsgemäß vergleicht die Teilnehmerstation den gemessenen Wert des wenigstens einen Parameters mit einem für den wenigstens einen Parameter vorgegebenen Wertebereich und ermittelt ihre Position als in dem Gebiet gelegen, wenn der Vergleich ergibt, dass der Wert in dem Wertebereich liegt.

Die Erfindung ermöglicht, dass die Teilnehmerstation kontinuierlich feststellen kann, ob sie sich in einem Gebiet befindet, in dem der Dienst aktiviert werden soll, ohne dass die Teilnehmerstation eine Positionsangabe, beispielsweise in Form von Koordinaten x,y,z oder Längengrad, Breitengrad, Höhe über Normalnull, explizit berechnet. Es wird lediglich der Wert des wenigstens eines Parameters beispielsweise in vorgebbaren Zeitabständen gemessen und jeweils mit einem vorgegebenen Wertebereich verglichen. An welcher exakten Position sich die Teilnehmerstation befindet, wird nicht berechnet. Der Vergleich ermöglicht der Teilnehmerstation aber festzustellen, ob sie sich innerhalb des Gebietes befindet, in dem der Dienst aktiviert werden soll. Nur wenn die Teilnehmerstation aufgrund des Vergleichs feststellt, dass sie sich in dem Gebiet befindet, wird der Dienst aktiviert und/oder eine Nachricht zur Aktivierung des Dienstes an eine Funkstation beispielsweise eines Funknetzes des Funkkommunikationssystems gesendet. Durch das erfindungsgemäße Verfahren wird der Rechenaufwand in der Teilnehmerstation reduziert, da sie ihre Position wiederholt abschätzt und nicht wiederholt explizit berechnet. Weiterhin erfolgt bei Diensten, die das Senden der Nachricht zur Aktivierung des Dienstes erfordern, eine entsprechende Signalisierung an das Funknetz nur dann, wenn sich die Teilnehmerstation in dem Gebiet befindet.

Zur Verbesserung der Positionsgenauigkeit, die durch den Vergleich des Wertes des wenigstens einen Parameters mit dem vorgegebenen Wertebereich erreicht werden kann, ist es von Vorteil, wenn die Teilnehmerstation zum Ermitteln der Position als in dem Gebiet gelegen zusätzlich ermittelt, dass eine Funkzellenkennung einer sie versorgenden Funkzelle und/oder eine weitere Funkzellenkennung wenigstens einer weiteren Funkzelle mit vorgegebenen Funkzellenkennungen übereinstimmen.

Vorteilhafter Weise empfängt die Teilnehmerstation von einer Funkstation des Funkkommunikationssystem eine Information, der der Wertebereich des wenigstens einen Parameters entnehmbar ist.

Vorteilhafter Weise werden netzseitig zur Positionsbestimmung von Teilnehmerstationen von diesen Teilnehmerstationen gemessene Werte des wenigstens einen Parameters verwendet und beim Festlegen des Wertebereichs des wenigstens einen Parameters wird berücksichtigt, welche Werte des wenigstens einen Parameters von denjenigen Teilnehmerstationen gemessenen wurden, für die eine in dem Gebiet G gelegene Position bestimmt wurde.

Selbstverständlich können alternativ oder zusätzlich auch theoretische Modelle des Funkkommunikationssystems verwendet werden, um den Wertebereich des wenigstens einen Parameters zu berechnen. Theoretische Modelle des Funkkommunikationssystems berücksichtigen beispielsweise die geografische Anordnung von Funkstationen und die Ausbreitungswege der ausgesandten elektromagnetischen Wellen sowie die theoretisch auftretenden Signaldämpfungen. Auch Werte, die beispielsweise im Rahmen von Testfahrten in dem Gebiet gemacht wurden, können zur Festlegung des Wertebereichs herangezogen werden.

Selbstverständlich können alternativ oder zusätzlich beispielsweise mittels einer in dem Gebiet von einem Dritten betriebenen weiteren Teilnehmerstation Werte des wenigsten einen Parameters gemessen werden, um daraus den Wertebereich zu ermitteln. Unter einem Dritten ist jemand zu verstehen, der nicht der Betreiber des Funkkommunikationssystem ist, d.h. jemand, der nicht im Auftrag des Betreibers handelt. Der Dritte ermittelt selbst mittels der weiteren Teilnehmerstation in dem Gebiet den Wertebereich des wenigstens einen Parameters und bietet den Dienst beispielsweise als ausführbares Programm zum Herunterladen (Download) z.B. über das Internet an. Eine Information über den Wertebereich wird beispielsweise gemeinsam mit dem Programm heruntergeladen. Der Dienst wird nachfolgend in der Teilnehmerstation ausgeführt, sobald die Teilnehmerstation ihre Position als in dem Gebiet gelegen ermittelt. Der Betreiber des Funkkommunikationssystems wird in diesem Fall weder zum Bereitstellen des Dienstes noch zum Ermitteln des Wertebereichs benötigt. Ortsbezogene Dienste können somit von einem beliebigen Dritten angeboten werden.

In dem Funkkommunikationssystem liegen netzseitig beispielsweise Daten von Positionsbestimmungen von Teilnehmerstationen vor, bei denen Positionsangaben, beispielsweise in Form von Koordinaten unter Verwendung von Werten des wenigstens einen Parameters, berechnet wurden. Anhand dieser Daten kann netzseitig ermittelt werden, in welchem Wertebereich von der Teilnehmerstation gemessene Werte des wenigstens einen Parameters liegen, wenn sich die Teilnehmerstation in dem für die Aktivierung des Dienstes vorgesehenen Gebiet befindet. Auf diese Weise ist netzseitig vorgebbar, für welche Werte des wenigstens einen Parameters die Teilnehmerstation ihre Position als in dem Gebiet gelegen ermittelt.

Vorteilhafter Weise werden als der wenigstens eine Parameter eine Empfangsfeldstärke und/oder eine Signallaufzeit hinsichtlich der die Teilnehmerstation versorgenden Funkzelle und/oder hinsichtlich weiterer Funkzellen verwendet.

Bei der Empfangsfeldstärke und der Signallaufzeit handelt es sich um messbare Parameter, die von der Teilnehmerstation beispielsweise für einen regulären Betrieb im Funkkommunikationssystem unabhängig von der Aktivierung des Dienstes gemessen werden. Beispielsweise werden derartige Messungen für Entscheidungen über einen Funkzellenwechsel teilnehmerstationsseitig und/oder netzseitig verwendet. Das Messen des Wertes stellt somit keinen zusätzlichen Aufwand für das Ermitteln der Position als in dem Gebiet gelegen dar. Zusätzlich zu für den regulären Betrieb der Teilnehmerstation erforderlichen Abläufen, erfolgt lediglich der Vergleich der gemessenen Werte mit dem vorgegebenen Wertebereich.

Vorteilhafterweise wird als der wenigstens eine Parameter ein Verhältnis aus einer Empfangsfeldstärke einer weiteren Funkzelle und einer Empfangsfeldstärke einer die Teilnehmerstation versorgenden Funkzelle verwendet.

Unter einem gemessenen Wert wird in dieser Anmeldung sowohl ein Wert verstanden, der unmittelbar als physikalische Größe anhand eines empfangenen Signals messbar ist (z.B. eine Empfangsfeldstärke), als auch ein Wert, der sich durch Rechenvorschriften aus einem anhand des empfangenen Signals gemessenen Wert berechnen lässt. Z.B. kann sich aus einem gemessenen Empfangszeitpunkt eines Signals ergeben: Signallaufzeit=(Empfangszeitpunkt minus Verarbeitungszeit im Funknetz minus Sendezeitpunkt) dividiert durch Zwei. Ein gemessener Wert repräsentiert eine physikalische Größe und hat daher insbesondere eine physikalische Einheit (z.B. Watt oder dBm oder Sekunde). Im Gegensatz dazu wird eine Funkzellenkennung anhand von durch ein Signal übermittelten Informationen aus dem Signal gewonnen, ist aber selbst nicht messbar und keine physikalische Größe.

Die erfindungsgemäße Teilnehmerstation weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

Das erfindungsgemäße Computerprogramm weist Programmabschnitte zur Durchführung des erfindungsgemäßen Verfahrens auf und bewirkt bei seiner Ausführung beispielsweise durch einen in der Teilnehmerstation angeordneten Prozessor die Durchführung der erfindungsgemäßen Verfahrensschritte oder Verfahrensvarianten.

Das erfindungsgemäße Funkkommunikationssystem weist alle Merkmale auf, die zur Durchführung des erfindungsgemäßen Verfahrens benötigt werden. Insbesondere können entsprechende Mittel zur Durchführung der einzelnen Verfahrensschritte oder Verfahrensvarianten vorgesehen sein.

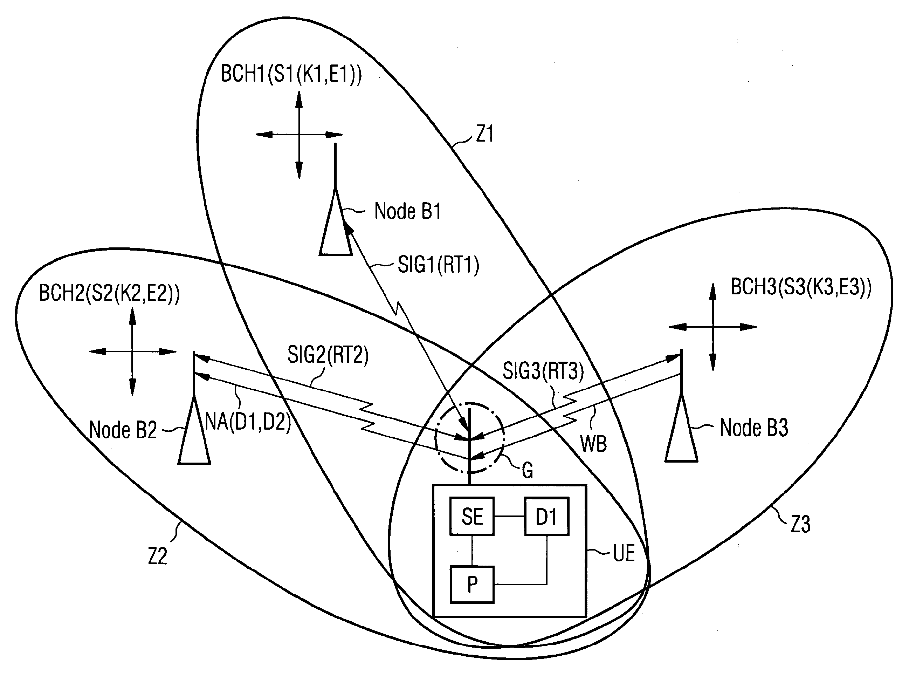

Die Erfindung wird im Folgenden anhand eines in der Figur dargestellten Ausführungsbeispieles näher erläutert.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder Email-Versand und/oder zum Internet-Zugang.

Eine Basisstation ist eine netzseitige Funkstation, die von einer Teilnehmerstation Nutz- und/oder Signalisierungsdaten empfängt und/oder Nutz- und/oder Signalisierungsdaten an die Teilnehmerstation sendet. Eine Basisstation ist über netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen.

Nachfolgend wird als Funkstation eine Basisstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

Die Figur zeigt schematisch eine Teilnehmerstation UE, die sich in einem durch einen gestrichelt gezeichneten Kreis dargestellten Gebiet G aufhält. Die Teilnehmerstation UE verfügt über eine Sende- und Empfangseinheit SE zum Senden und Empfangen von Nutz- und Signalisierungsdaten sowie zur Verarbeitung zu sendender und empfangener Daten. Weiterhin weist die Teilnehmerstation UE eine Steuereinheit P auf, mittels derer beispielsweise die Sende- und Empfangseinheit SE gesteuert wird. Insbesondere dient die Steuereinheit P in Zusammenwirkung mit der Sende- und Empfangseinheit SE zur Durchführung nachfolgen beschriebener Messungen, Datenauswertungen und Positionsschätzungen sowie zur Steuerung der Aktivierung und Ausführung ortsbezogener Dienste insbesondere durch Generierung erforderlicher Nachrichten und Steuersignale. Die Teilnehmerstation UE ist einem Funkkommunikationssystem zugeordnet, das aus einer Vielzahl von Basisstationen sowie weiteren für den Betrieb des Funkkommunikationssystems benötigten netzseitigen Einrichtungen besteht. Aus Gründen der Übersichtlichkeit sind in der Figur nur drei Basisstationen dargestellt.

Eine erste Basisstation NodeB1 versorgt eine erste Funkzelle Z1 und sendet auf einem ersten Rundsendekanal BCH1 ein erstes Signal S1, dem eine das erste Signals S1 empfangende Teilnehmerstation, insbesondere die Teilnehmerstation UE, eine erste Kennung K1 (Cell-ID) der ersten Funkzelle Z1 entnehmen kann. Weiterhin werden zwischen der Teilnehmerstation UE und der ersten Basisstation NodeB1 erste Signale SIG1 ausgetauscht, anhand derer die Teilnehmerstation UE eine erste Signallaufzeit RT1 von der Teilnehmerstation UE zu der ersten Basisstation NodeB1 und zurück ermittelt (engl. round trip time). Beispielsweise sendet die Teilnehmerstation UE ein Signal zu einem ihr bekannten Sendezeitpunkt an die erste Basisstation NodeB1 und empfängt als Antwort auf dieses Signal ein weiteres Signal von der ersten Basisstation NodeB1 zu einem von ihr gemessenen Empfangszeitpunkt. Aus der Differenz zwischen Empfangszeitpunk, Sendezeitpunkt und der in der Teilnehmerstation UE bekannten zur Signalverarbeitung erforderlichen Zeit innerhalb der ersten Basisstation NodeB1, kann die Teilnehmerstation UE die erste Signallaufzeit RT1 zur ersten Basisstation NodeB1 berechnen.

Eine zweite Basisstation NodeB2 versorgt eine zweite Funkzelle Z2 und sendet auf einem zweiten Rundsendekanal BCH2 ein zweites Signal S2, dem die Teilnehmerstation UE eine zweite Kennung K2 der zweiten Funkzelle Z2 entnimmt. Weiterhin werden zwischen der Teilnehmerstation UE und der zweiten Basisstation NodeB2 zweite Signale SIG2 ausgetauscht, anhand derer die Teilnehmerstation UE eine zweite Signallaufzeit RT2 von der Teilnehmerstation UE zu der zweiten Basisstation NodeB2 und zurück ermittelt. Das Ermitteln der zweiten Signallaufzeit RT2 erfolgt beispielsweise wie bereits zuvor für die erste Signallaufzeit RT1 beschrieben.

Eine dritte Basisstation NodeB3 versorgt eine dritte Funkzelle Z3 und sendet auf einem dritten Rundsendekanal BCH3 ein drittes Signal S3 den die Teilnehmerstation UE eine dritte Kennung K3 der dritten Funkzelle Z3 entnehmen kann. Weiterhin werden zwischen der Teilnehmerstation UE und der dritten Basisstation NodeB3 dritte Signale SIG3 ausgetauscht, anhand derer die Teilnehmerstation UE, beispielsweise wie bereits für die erste Signallaufzeit RT1 beschrieben, eine dritte Signallaufzeit RT2 von der Teilnehmerstation UE zu der dritten Basisstation NodeB3 und zurück ermittelt.

Weiterhin ermittelt die Teilnehmerstation UE eine jeweilige Empfangsfeldstärke (oder alternativ Empfangsleistung) E1, E2, E3 des ersten, zweiten und dritten Signals S1, S2, S3. Die Empfangsfeldstärken E1, E2, E3 der ersten, zweiten und dritten Signale S1, S2, S3 sowie die erste, zweite und dritte Signallaufzeit RT1, RT2, RT3 ermittelt die Teilnehmerstation UE beispielsweise im Rahmen ihres regulären Betriebs im Funkkommunikationssystem.

Alternativ können Signallaufzeiten als Hin- und Rücklaufzeiten (round trip time) oder für eine der beiden Richtungen netzseitig ermittelt und der Teilnehmerstation beispielsweise im Rahmen ihres regulären Betriebs signalisiert werden.

Die Teilnehmerstation UE hat sich für zwei im Funkkommunikationssystem verfügbare ortsbezogene Dienste D1, D2 registriert, die dann aktiviert, d.h. ausgeführt werden sollen, wenn sich die Teilnehmerstation UE in dem Gebiet G aufhält. Ein ausführbares Programmelement (engl. executable file), das zum Ausführen eines ersten Dienstes D1 in der Teilnehmerstation ausgeführt werden muss, hat die Teilnehmerstation UE nach der Registrierung für den ersten Dienst D1 beispielsweise von der dritten Basisstation NodeB3 empfangen und gespeichert. Weiterhin ist in der Teilnehmerstation UE eine Information gespeichert und abrufbar, dass sich die Teilnehmerstation UE für den zweiten Dienst D2 registriert hat. Zur Ausführung des zweiten Dienstes D2 sind keine in der Teilnehmerstation UE gespeicherten ausführbaren Programmelemente erforderlich. Der zweite Dienst D2 erfordert zu seiner Ausführung eine Benachrichtigung einer dafür zuständigen netzseitigen Einrichtung mittels einer entsprechenden über eine Luftschnittstelle an eine die Teilnehmerstation in dem Gebiet G versorgende Basisstation übertragenen Nachricht.

Das Funkkommunikationssystem verfügt über eine Einheit zur Positionsbestimmung, die bei einer Positionsbestimmung einer Teilnehmerstation die Position anhand derjenigen Funkzellenkennungen (Cell-IDs) der Funkzellen ermittelt, die von der Teilnehmerstation zum Zeitpunkt der Positionsbestimmung empfangen werden. Um die Positionsgenauigkeit zu erhöhen verwendet die netzseitige Positionsbestimmungseinheit zusätzlich Empfangsfeldstärken (oder Empfangsleistungen) sowie Signallaufzeiten bezüglich der Funkzellen, die die Teilnehmerstation zum Zeitpunkt der Positionsbestimmung empfängt. Ein derartiges Verfahren ist beispielsweise das von der Firma Siemens entwickelte E-CITA, dessen Verwenden von Empfangsleistungen zur Positionsbestimmung beispielsweise in "A New Method for Positioning of Mobile Users by Comparing a Time Series of Measured Reception Power Levels with Predictions", H. Schmitz et al., Vegicular Technology Conference VTC 2003, 57th IEEE Semiannual, Vol. 3, Seite 1993-1997, beschrieben wird. Eine netzseitige Positionsbestimmung gibt als Ergebnis beispielsweise eine Position der Teilnehmerstation in Form von Koordinaten (Längengrad, Breitengrad, Höhe über Normalnull) an.

Netzseitig wird ermittelt, welche Funkzellen, d.h. welche Funkzellenkennungen von einer Teilnehmerstation aus empfangenen Signalen ermittelbar sein müssen, wenn sich die Teilnehmerstation in dem Gebiet G aufhält. Zusätzlich wird netzseitig ermittelt, welche Werte Empfangsfeldstärken und Signallaufzeiten von Signalen von den die entsprechenden Funkzellen versorgenden Basisstationen in dem Gebiet G haben können. Für die Empfangsfeldstärken und Signallaufzeiten werden netzseitig somit für das Gebiet G charakteristische Wertebereiche ermittelt. Die für das Gebiet G ermittelten Wertebereiche sowie die entsprechenden Funkzellenkennungen werden der Teilnehmerstation UE von der dritten Basisstation NodeB3 durch eine entsprechende Gebietsnachricht WB unmittelbar nach der Registrierung für den ersten und zweiten Dienst D1, D2 mitgeteilt. Zum Zeitpunkt der Registrierung für den ersten und zweiten Dienst D1, D2 empfängt die Teilnehmerstation UE beispielsweise Signale der dritten Basisstation NodeB3 am stärksten und wird daher von der dritten Basisstation NodeB3 versorgt.

Die Teilnehmerstation UE ermittelt nach der Registrierung für den ersten und zweiten Dienst D1, D2 fortwährend, d.h. wiederholt, beispielsweise in netzseitig vorgegebenen Zeitabständen, Funkzellenkennungen derjenigen Funkzellen von denen sie Signale empfängt und misst Empfangsfeldstärken und Signallaufzeiten hinsichtlich der die Funkzellen versorgenden Basisstationen. Weiterhin vergleicht die Teilnehmerstation UE die ermittelten Funkzellenkennungen sowie die gemessenen Werte der Empfangsfeldstärken und Signallaufzeiten mit für das Gebiet G charakteristischen Wertebereichen und Funkzellenkennungen, die sie der entsprechenden Gebietsnachricht WB entnimmt.

Gelangt die Teilnehmerstation UE in das Gebiet G, in dem der erste Dienst D1 und der zweite Dienst D2 aktiviert werden sollen, stellt sie fest, dass sowohl die Funkzellenkennungen K1, K2, K3 der ersten, zweiten und dritten Funkzellen Z1, Z2, Z3 mit den Funkzellenkennungen übereinstimmen, die in der Nachricht WB angegeben wurden, als auch, dass die Werte der Empfangsfeldstärken des ersten, zweiten und dritten Signals S1, S2, S3 und die Werte der ersten, zweiten und dritten Signallaufzeit RT1, RT2, RT3 innerhalb der jeweiligen entsprechenden Wertebereiche liegen. Aufgrund des Vergleichsergebnisses weiß die Teilnehmerstation UE, dass sie sich in dem Gebiet G befindet, in dem der erste und der zweite Dienst aktiviert werden sollen. Die Steuereinheit P der Teilnehmerstation UE aktiviert daraufhin den ersten Dienstes D1 durch Ausführen des zugehörigen Programmcodes. Im Rahmen des ersten Dienstes D1 werden Teile des Dienstes ausschließlich in der Teilnehmerstation mittels des Programmcodes durchgeführt. Weiterhin werden bei Ausführung des ersten Dienstes D1 Daten des ersten Dienstes D1 mit einer Funkstation, in diesem Ausführungsbeispiel mit der zweiten Basisstation NodeB2, die die Teilnehmerstation UE in dem Gebiet G versorgt, ausgetauscht. Beispielsweise wird mittels des Programmcodes ein Nutzer zur Dateneingabe in die Teilnehmerstation aufgefordert und die eingegebenen Daten werden über die zweite Basisstation NodeB2 an einen Anbieter des ersten Dienstes D1 weitergeleitet.

Weiterhin sendet die Teilnehmerstation UE eine Nachricht NA zur Dienstaktivierung an die sie versorgende zweite Basisstation NodeB2. Durch diese Nachricht wird signalisiert, dass sich die Teilnehmerstation in dem Gebiet G befindet und dass eine Aktivierung des zweiten Dienstes D2 erfolgen soll. Die Aktivierung des zweiten Dienstes D2 erfolgt beispielsweise automatisch aufgrund der empfangenen Nachricht NA. Alternativ kann auch netzseitig, d.h. beispielsweise durch einen Dienstanbieter des zweiten Dienstes D2, anhand weiterer Kriterien entschieden werden, ob der zweite Dienst D2 aktiviert wird. Beispielsweise können als weitere Kriterien vorgesehen sein, dass der zweite Dienst D2 nur zu bestimmten Tageszeiten ausgeführt wird und/oder nur einer bestimmten Anzahl von Teilnehmerstationen gleichzeitig zur Verfügung gestellt wird.

Zu einer vollständigen Aktivierung des ersten Dienstes D1 ist auch eine Benachrichtigung einer Teile des ersten Dienstes D1 bereitstellenden beispielsweise mit dem Dienstanbieter des ersten Dienstes D1 kommunizierenden Einheit des Funkkommunikationssystem erforderlich. Daher ist in der Nachricht NA zur Dienstaktivierung eine Information hinsichtlich des ersten Dienstes D1 enthalten, der entnehmbar ist, dass die Teile des ersten Dienstes D1 von der Einheit aktiviert werden sollen. Die Aktivierung kann automatisch aufgrund der Information oder in Abhängigkeit weiterer Kriterien erfolgen, beispielsweise anhand der Tageszeit und/oder der Anzahl der den ersten Dienst D1 gleichzeitig verwendenden Teilnehmerstationen.

In Funkkommunikationssystemen gemäß dem GSM-Standard wird als Signallaufzeit der Wert der so genannten timing advance verwendet, der nur die Übertragung von der Teilnehmerstation zur Basisstation betrifft und der der Teilnehmerstation im Rahmen ihres regulären Betriebs von der Basisstation wiederholt signalisiert wird.

Selbstverständlich können als Parameter, deren gemessene Werte mit Wertebereichen verglichen werden, zusätzlich oder alternativ zu Empfangsfeldstärken und Signallaufzeiten auch andere messbare Parameter verwendet werden, die beispielsweise netzseitig im Rahmen einer Positionsbestimmung verwendet werden. Ein weiterer messbarer Parameter ist beispielsweise der Pfadverlust bei Übertragungen zwischen Teilnehmerstationen und Basisstationen. Je mehr gemessene Werte von unterschiedlichen Parametern gleichzeitig zum Ermitteln der Position als in dem Gebiet gelegen herangezogen werden, umso höher ist die Wahrscheinlichkeit, dass sich die Teilnehmerstation tatsächlich in dem Gebiet befindet. Je nach für einen ortsbezogenen Dienst erforderlicher Positionierungsgenauigkeit ist Vergleich einer unterschiedlichen Anzahl gemessener Werte unterschiedlicher Parameter mit entsprechenden Wertebereichen von Vorteil.

Es liegt ebenfalls im Rahmen der Erfindung, dass die Teilnehmerstation UE als messbare Parameter die Verhältnisse (Quotienten) aus der Empfangsfeldstärke E1 des ersten Signals S1 und der Empfangsfeldstärke E2 des zweiten Signals S2 sowie aus der Empfangsfeldstärke E3 des dritten Signals und der Empfangsfeldstärke E2 des zweiten Signals S2 bildet und mit für die jeweiligen Verhältnisse für das Gebiet G vorgegebenen Wertebereichen vergleicht.

In Funkkommunikationssystemen mit mehreren Funkzellen, in denen Funkstationen Signale zeitlich synchronisiert senden, kann die Teilnehmerstation Zeitdifferenzen von empfangenen Signalen bilden und mit für diese Zeitdifferenzen für ein entsprechendes Gebiet vorgegebenen Wertebereichen vergleichen. Derartige Funkkommunikationssysteme sind beispielsweise digitale Rundfunksysteme wie DAB/DVB (Digital Audio Broadcast/Digital Video Broadcast) oder UMTS TDD (Time Division Duplex) mit synchronisierten Signalen der Basisstationen.

Um die Genauigkeit ihrer Positionsbestimmung weiter zu erhöhen, kann die Teilnehmerstation UE die von ihr gemessenen Werte von Parametern (z.B. Empfangsfeldstärke oder Signallaufzeit) mehrfach messen und jeweils Mittelwerte bilden, die mit den Wertebereichen verglichen werden. Zusätzlich können beispielsweise auch Standardabweichungen der gebildeten Mittelwerte mit für jeden Parameter beispielsweise netzseitig individuell vorgegebenen Standardabweichungen verglichen werden.

Weiterhin kann die Teilnehmerstation Vorrichtungen aufweisen, mittels derer sie Werte von Parametern in Funkkommunikationssystemen messen kann, denen sie zumindest zum Messzeitpunkt nicht zugeordnet ist. Beispielsweise ist die Teilnehmerstation einem Funkkommunikationssystem gemäß dem GSM-Standard zugeordnet, d.h. die Funkstation der versorgenden Funkzelle ist eine Basisstation gemäß GSM-Standard, Werte von Parametern misst die Teilnehmerstation zur Abschätzung ihrer Position aber auch in einem Funkkommunikationssystem gemäß dem UMTS-Standard durch.

Während der Ausführung des ersten und zweiten Dienstes D1, D2 ermittelt die Teilnehmerstation UE selbstverständlich weiterhin, ob sie sich noch in dem Gebiet G befindet. Dazu ermittelt sie beispielsweise weiterhin Funkzellenkennungen von Funkzellen, die sie empfängt und misst die entsprechenden Empfangsfeldstärken und Signallaufzeiten. Es wird auch weiterhin ein Vergleich mit den entsprechenden in der Gebietsnachricht WB enthaltenen Angaben durchgeführt, so dass der erste und zweite Dienst D1, D2 beendet oder unterbrochen werden, sobald oder solange die Teilnehmerstation UE aufgrund des Vergleichs ermittelt, dass ihre Position nicht mehr in dem Gebiet G gelegen ist.

Selbstverständlich kann die Teilnehmerstation zum Überprüfen, ob sie sich weiterhin in dem Gebiet G aufhält, sowohl die gleichen als auch andere Parameter messen, als zur Aktivierung der Dienste gemessen wurden. Welche Parameter die Teilnehmerstation misst hängt beispielsweise davon ab, welche Parameter die Teilnehmerstation in dem Betriebszustand empfangen kann, in dem sie die Dienste D1, D2 empfängt. Beispielsweise misst die Teilnehmerstation während einer aktiven Funkverbindung andere Parameter als in einem Ruhezustand (idle mode), in dem die Teilnehmerstation keine Verbindung zu einer Funkzelle hat und beispielsweise eine geeignete Funkzelle abhört und auf eingehende Anrufe wartet.

Der Teilnehmerstation kann beispielsweise netzseitig vorgegeben werden, welche Parameter die Teilnehmerstation zur Abschätzung ihrer Position misst. Dabei kann das Messen bestimmter Parameter zwingend vorgeschrieben sein, so dass eine Nichtmessbarkeit eines dieser obligatorisch zu messenden Parameter dazu führt, dass die Teilnehmerstation ihre Position als nicht in dem Gebiet gelegen ermittelt. Andere Parameter werden beispielsweise nur optional gemessen. Die Teilnehmerstation entscheidet selbst, ob sie die anderen Parameter misst. Eine Nichtmessbarkeit eines der optionalen Parameter reicht für sich allein betrachtet nicht dafür aus, dass die Teilnehmerstation ermittelt, dass sie sich nicht in dem Gebiet befindet.

Werden für mehrere Parameter Werte gemessen und mit den jeweiligen Wertebreichen zum Abschätzen der Position verglichen, ist in der Teilnehmerstation ein Algorithmus zur Wichtung der Vergleichergebnisse vorgesehen, anhand dessen eine Entscheidung erfolgt, ob sich die Teilnehmerstation in dem Gebiet befindet, wenn nur einige der gemessenen Werte in dem jeweiligen Wertebereich liegen. Beispielsweise kann der Algorithmus insbesondere vorsehen, dass alle obligatorisch zu messenden Parameter Werte aufweisen müssen, die in dem jeweiligen Wertebereich liegen, damit die Teilnehmerstation ihre Position als in dem Gebiet gelegen ermittelt. Zusätzlich kann vorgesehen sein, dass beispielsweise eine bestimmte Anzahl optionaler Parameter Werte in dem jeweiligen Wertebereich aufweisen muss.

## Patentansprüche

1. Verfahren zum Betrieb einer Teilnehmerstation (UE) eines Funkkommunikationssystems, bei dem
ein Dienst (D1) in der Teilnehmerstation aktiviert wird und/oder eine Nachricht (NA) zur Aktivierung des Dienstes (D1, D2) von der Teilnehmerstation (UE) an eine Funkstation (NodeB2) des Funkkommunikationssystems gesendet wird, wenn die Teilnehmerstation (UE) ermittelt, dass sie sich in einem Gebiet (G) befindet, in dem der Dienst (D1, D2) aktiviert werden soll,
und die Teilnehmerstation (UE) zum Positionsermitteln einen Wert wenigstens eines Parameters (E1, E2, E3, RT1, RT2, RT3) misst,
**dadurch gekennzeichnet,**
**dass** die Teilnehmerstation den gemessenen Wert des wenigstens einen Parameters (E1, E2, E3, RT1, RT2, RT3) mit einem für den wenigstens einen Parameter (RT1, RT2, RT3) vorgegebenen Wertebereich vergleicht und ihre Position als in dem Gebiet (G) gelegen ermittelt, wenn ein Vergleich ergibt, dass der Wert in dem Wertebereich liegt.

2. Verfahren nach Anspruch 1,
**dadurch gekennzeichnet,**
**dass** die Teilnehmerstation (UE) zum Ermitteln der Position als in dem Gebiet (G) gelegen zusätzlich ermittelt, dass eine Funkzellenkennung (K2) einer sie versorgenden Funkzelle (Z2) und/oder eine weitere Funkzellenkennung (K1, K3) wenigstens einer weiteren Funkzelle (Z1, Z3) mit vorgegebenen Funkzellenkennungen (K1, K2, K3) übereinstimmen.

3. Verfahren nach einem der vorstehenden Ansprüche,
**dadurch gekennzeichnet,**
**dass** die Teilnehmerstation (UE) von einer Funkstation (NodeB3) des Funkkommunikationssystems eine Information (WB) empfängt, der der Wertebereich des wenigstens einen Parameters (E1, E2, E3, RT1, RT2, RT3) entnehmbar ist.

4. Verfahren nach Anspruch 3,
**dadurch gekennzeichnet,**
**dass** netzseitig zur Positionsbestimmung von Teilnehmerstationen von diesen Teilnehmerstationen gemessene Werte des wenigstens einen Parameters verwendet werden, und dass beim Festlegen des Wertebereichs des wenigstens einen Parameters (E1, E2, E3, RT1, RT2, RT3) berücksichtigt wird, welche Werte des wenigstens einen Parameters (E1, E2, E3, RT1, RT2, RT3) von denjenigen Teilnehmerstationen gemessenen wurden, für die eine in dem Gebiet G gelegene Position bestimmt wurde.

5. Verfahren nach einem der vorstehenden Ansprüche,
**dadurch gekennzeichnet,**
**dass** als der wenigstens eine Parameter eine Empfangsfeldstärke (E1, E2, E3) und/oder eine Signallaufzeit (RT1, RT2, RT3) hinsichtlich einer die Teilnehmerstation (UE) versorgenden Funkzelle (Z2) und/oder hinsichtlich weiterer Funkzellen (Z1, Z3) verwendet werden.

6. Verfahren nach einem der vorstehenden Ansprüche,
**dadurch gekennzeichnet,**
**dass** als der wenigstens eine Parameter ein Verhältnis aus einer Empfangsfeldstärke (E1, E3) einer weiteren Funkzelle (Z1, Z3) und einer Empfangsfeldstärke (E2) einer die Teilnehmerstation (UE) versorgenden Funkzelle (Z2) verwendet wird.

7. Teilnehmerstation (UE) für ein Funkkommunikationssystem, mit Mitteln (P) zum Aktivieren eines Dienstes (D1) in der Teilnehmerstation (UE) und/oder mit Mitteln (SE) zum Senden einer Nachricht (NA) zur Aktivierung des Dienstes (D1, D2) an das Funkkommunikationssystem, wobei Mittel (P) zum Steuern der Mittel (P) zum Aktivieren und der Mittel (SE) zum Senden der Nachricht derart ausgebildet sind, dass die Mittel (P) zum Aktivieren und die Mittel (SE) zum Senden der Nachricht dann entsprechend verwendet werden, wenn die Teilnehmerstation (UE) ermittelt, dass sie sich in einem Gebiet (G) befindet, in dem der Dienst (D1, D2) aktiviert werden soll,
und mit Mitteln (SE, P) zum Messen eines Wertes wenigstens eines Parameters (E1, E2, E3, RT1, RT2, RT3) zur Positionsermittlung,
**gekennzeichnet durch**,
Mittel (P) zum Vergleichen des Wertes des wenigstens einen Parameters (E1, E2, E3, RT1, RT2, RT3) mit einem für den wenigstens einen Parameter (E1, E2, E3, RT1, RT2, RT3) vorgegebenen Wertebereich und mit Mitteln (P) zum Ermitteln der Position der Teilnehmerstation (UE) als in dem Gebiet (G) gelegen, wenn der Vergleich ergibt, dass der Wert in dem Wertebereich liegt.

8. Computerprogramm zur Durchführung eines Verfahrens gemäß einem der vorstehenden Ansprüche.

9. Funkkommunikationssystem
mit wenigstens einer Teilnehmerstation mit
- Mitteln (P) zum Aktivieren eines Dienstes (D1) in der Teilnehmerstation (UE) und/oder mit Mitteln (SE) zum Senden einer Nachricht (NA) zur Aktivierung des Dienstes (D1, D2) an das Funkkommunikationssystem, wobei Mittel (P) zum Steuern der Mittel (P) zum Aktivieren und der Mittel (SE) zum Senden der Nachricht derart ausgebildet sind, dass die Mittel (P) zum Aktivieren und die Mittel (SE) zum Senden der Nachricht dann entsprechend verwendet werden, wenn die Teilnehmerstation (UE) ermittelt, dass sie sich in einem Gebiet (G) befindet, in dem der Dienst (D1, D2) aktiviert werden soll,
- mit Mitteln (SE, P) zum Messen eines Wertes wenigstens eines Parameters (E1, E2, E3, RT1, RT2, RT3) zur Positionsermittlung,
- mit Mitteln (P) zum Vergleichen des Wertes des wenigstens einen Parameters (E1, E2, E3, RT1, RT2, RT3) mit einem für den wenigstens einen Parameter (E1, E2, E3, RT1, RT2, RT3) vorgegebenen Wertebereich,
- und mit Mitteln (P) zum Ermitteln der Position der Teilnehmerstation (UE) als in dem Gebiet (G) gelegen, wenn der Vergleich ergibt, dass der Wert in dem Wertebereich liegt,
und mit wenigstens einer Funkstation
- mit Mitteln zum Senden einer Information (WB), der der Wertebereich des wenigstens einen Parameters (E1, E2, E3, RT1, RT2, RT3) entnehmbar ist.
